# EUROPÄISCHE PATENTSCHRIFT

(11) **EP 2 803 121 B1**
(45) Veröffentlichungstag und Bekanntmachung des Hinweises auf die Patenterteilung: **01.05.2019**
(21) Anmeldenummer: 12815639.5
(22) Anmeldetag: 19.12.2012
(51) Int. Cl.: H01S 3/23, H01S 3/06, H01S 3/16

(54) **NICHTREGENERATIVER OPTISCHER VERSTÄRKER**
NON-REGENERATIVE OPTICAL AMPLIFIER
AMPLIFICATEUR OPTIQUE NON-RÉGÉNÉRATIF

(30) Priorität: 13.01.2012 DE 102012000510
(43) Veröffentlichungstag der Anmeldung: 19.11.2014
(73) Patentinhaber: Neolase GmbH, 30419 Hannover (DE)
(72) Erfinder: FREDE, Maik, 48431 Rheine (DE)
(74) Vertreter: Wagner, Carsten
(86) Internationale Anmeldenummer: PCT/EP2012/005260
(87) Internationale Veröffentlichungsnummer: WO 2013/104404

(56) Entgegenhaltungen:
- EP-A2- 1 879 271
- DE-A1-102010 008 170
- US-A- 3 626 318
- US-A- 4 794 346
- US-A1- 2002 186 455
- US-A1- 2009 122 392
- US-B2- 6 757 100
- CHANDRAJIT BASIL ET AL: "Single frequency solid state laser amplifier system: Towards 3 rd generation of gravitational wave detectors", QUANTUM ELECTRONICS CONFERENCE&LASERS AND ELECTRO-OPTICS (CLEO/IQEC/PACIFIC RIM), 2011, IEEE, 28. August 2011 (2011-08-28), Seiten 1111-1113, XP032175299, DOI: 10.1109/IQEC-CLEO.2011.6193796 ISBN: 978-1-4577-1939-4
- SCHULZ B ET AL: "Compact high-power, pulsed, single-frequency MOPA laser system with 20 W average output power", LASERS AND ELECTRO-OPTICS, 2007 AND THE INTERNATIONAL QUANTUM ELECTRON ICS CONFERENCE. CLEOE-IQEC 2007. EUROPEAN CONFERENCE ON, IEEE, PI, 1. Juni 2007 (2007-06-01), Seiten 1-1, XP031162288, ISBN: 978-1-4244-0930-3

## Beschreibung

Die Erfindung betrifft einen nichtregenerativen optischen Verstärker.

Derartige Verstärker sind allgemein bekannt und dienen dazu, ein eingehendes optisches Signal zu verstärken.

Hierbei wird zwischen regenerativen und nichtregenerativen Verstärkern unterschieden.

Ein regenerativer Verstärker besteht aus einem Verstärkungsmedium, einem optischen Resonator und einem optischen Schalter, der dazu dient, Pulse aus dem Resonator auszukoppeln. Als optischer Schalter kann beispielsweise eine Pockels-Zelle verwendet werden. Im Ergebnis wird somit in einem regenerativen Verstärker das zu verstärkende Signal während einer Mehrzahl von Umläufen in dem Resonator verstärkt.

Demgegenüber wird in einem nichtregenerativen optischen Verstärker das zu verstärkende Signal in einem Durchgang durch das Verstärkungsmedium verstärkt. Dementsprechend weist ein nichtregenerativer optischer Verstärker weder einen optischen Resonator noch einen optischen Schalter auf. Im einfachsten Falle besteht er ausschließlich aus einem optischen Verstärkungsmedium.

Durch "Operational characteristics of dual gain single cavity Nd:YVO4 laser" (PRAMANA-J.phys., Vol. 58, No. 1, January 2002) ist ein optischer Oszillator bekannt, der einen Resonator aufweist, in dem zwei Nd:YVO₄-Laserkristalle als Verstärkungsmedien angeordnet sind.

Durch "Generation of sub-40 fs pulses from a modelocked dual-gain-media Nd:glass laser" (Appld. Phys. B 74 [Suppl.), S. 177 - S. 179 (2002) ist ein Laseroszillator bekannt, der einen Resonator aufweist, in dem zwei unterschiedliche Laserkristalle als Verstärkungsmedien angeordnet sind.

Durch "Regenerative thin disk amplifier with combined gain spectra producing 500 µJ sub 200 fs pulses" (11 May 2009 / Vol. 17, No. 10 / Optics Express, S. 8046 ff.) ist ein regenerativer optischer Verstärker bekannt, bei dem unterschiedliche optische Verstärkungsmedien verwendet werden.

Ein ähnlicher regenerativer Verstärker ist auch durch "Ultrafast double-slap regenerative amplifier with combined gain spectra and intracavity dispersion compensation" (11 October 2010 / Vol. 18, No. 21 / Optics Express, S. 21973 ff.) bekannt.

Durch US 5,956,354 ist ein Laser bekannt, der einen Resonator aufweist, in dem zwei unterschiedliche Laserkristalle als optische Verstärkungsmedien angeordnet sind.

Durch US 3 626 318 A ist ein Lasersystem bekannt, dass einen optischen Verstärker mit einem Tandem-Oszilllator aufweist.

Durch Chandrajit Basil et. Al. "Single frequency solid state laser amplifier system: Towards 3rd generation of gravitational wave detectors", QUANTUM ELECTRO-NICS CONFERENCE & LASERS AND ELECTROOPTICS (CLEO/IPEQ/PACIFIC RIM), 2011, IEEE, 28. August 2011 (2011-08-28), Seiten 1111-1113, ISBN: 978-1-4577-1939-4, ist ein Lasersystem mit einem oszillatorbasierten Verstärker bekannt.

Durch US 2002/01 8644551 ist ein optischer Verstärker bekannt, der ein erstes optisches Verstärkungsmedium und ein zweites optisches Verstärkungsmedium aufweist, wobei die Materialeigenschaften des ersten Verstärkungsmedium wenigstens teilweise von den Materialeigenschaften des zweiten Verstärkungsmedium abweichen, wobei sich die Emissionsspektren der Verstärkungsmedium teilweise überlappen, wobei die optischen Verstärkungsmedium durch Festkörper-Volumenkristalle gebildet sind und wobei wenigstens ein Verstärkungsmedium einen Wirtskristall aufweist, der mit einem Dotierungsmaterial dotiert ist.

Der Erfindung liegt die Aufgabe zugrunde, einen nichtregenerativen optischen Verstärker mit besonders günstigen Eigenschaften anzugeben.

Diese Aufgabe wird durch die im Anspruch 1 angegebene Erfindung gelöst.

Die Erfindung stellt einen nichtregenerativen optischen Verstärker zur Verfügung, der wenigstens zwei optische Verstärkungsmedien aufweist, deren Materialeigenschaften wenigstens teilweise voneinander abweichen, wobei sich die Emissionsbandbreiten der Verstärkungsmedien überlappen. Die Erfindung ermöglicht es beispielsweise, die Emissionsbandbreite eines regenerativen Verstärkers zu erhöhen. Weiterhin kann mit der Erfindung beispielsweise die Absorption des Anregungslichtes in den Verstärkungsmedien gezielt beeinflusst werden. Weiterhin können die thermischen Eigenschaften des Verstärkers erfindungsgemäß beeinflusst werden, um beispielsweise die in den Verstärkungsmedien bei Betrieb des Verstärkers herrschende Temperatur zu beeinflussen.

Die Erfindung eröffnet damit beim Design eines nichtregenerativen optischen Verstärkers zusätzliche Möglichkeiten.

Vorteilhafte und zweckmäßige Weiterbildungen der Erfindung sind in den Unteransprüchen angegeben.

Die Erfindung wird nachfolgend anhand der beigefügten Zeichnung näher erläutert, in der stark schematisiert Ausführungsbeispiele eines erfindungsgemäßen nichtregenerativen optischen Verstärkers dargestellt sind.

Es zeigt:
- Fig. 1: stark schematisiert und blockschaltbildartig ein erstes Ausführungsbeispiel eines erfindungsgemäßen Verstärkers,
- Fig. 2: ein Diagramm zur Verdeutlichung der Emissionsspektren der bei dem Verstärker gemäß Fig. 1 verwendeten Verstärkungsmedien,
- Fig. 3: ein Diagramm zur Verdeutlichung des resultierenden Emissionsspektrums des Verstärkers gemäß Fig. 1,
- Fig. 4: in gleicher Darstellung wie Fig. 1 ein zweites Ausführungsbeispiel eines erfindungsgemäßen Verstärkers,
- Fig. 5: ein Diagramm zur Verdeutlichung der Ortsabhängigkeit der Absorption des Anregungslichtes bei dem Ausführungsbeispiel gemäß Fig. 4,
- Fig. 6: in gleicher Darstellung wie Fig. 1 ein drittes Ausführungsbeispiel eines erfindungsgemäßen Verstärkers und
- Fig. 7: ein Diagramm zur Verdeutlichung der Ortsabhängigkeit der Temperatur entlang der Kristallachse bei Betrieb des Verstärkers gemäß Fig. 6.

In den Figuren der Zeichnung sind gleiche bzw. sich entsprechende Bauteile mit den gleichen Bezugszeichen versehen.

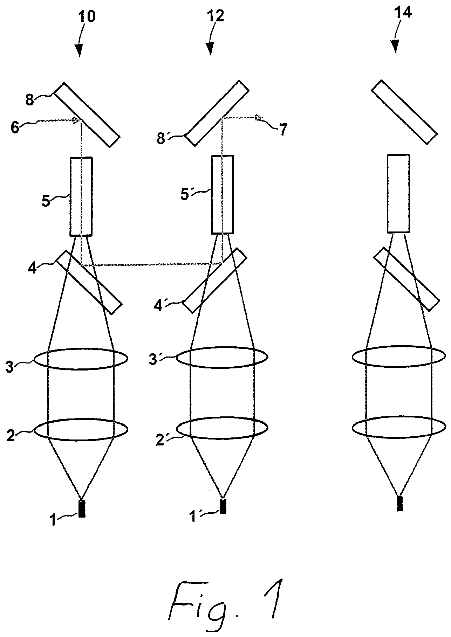

In Fig. 1 ist ein erstes Ausführungsbeispiel eines erfindungsgemäßen Verstärkers dargestellt. Mit dem Bezugszeichen 1 ist eine Anregungslichtquelle bezeichnet, mittels derer Anregungslicht in den Verstärker eingestrahlt wird. Die Anregungslichtquelle kann als fasergekoppelte Lichtquelle oder als Freistrahllichtquelle ausgebildet sein. Der Anregungslichtquelle 1 ist eine bei diesem Ausführungsbeispiel aus zwei Linsen 2, 3 bestehende Linsenanordnung vorgesehen, die zur Fokussierung des Anregungslichtstrahles dient. Der Linsenanordnung ist ein erster Spiegel 4 nachgeordnet, der für die Laserwellenlänge hochreflektierend, für die Wellenlänge des Anregungslichtes jedoch hochtransmittierend ist. Ein in Fig. 1 mit dem Bezugszeichen 6 bezeichneter zu verstärkender Eingangsstrahl wird über einen zweiten Spiegel 8 eingekoppelt. Zwischen den Spiegeln 4, 8 ist ein erstes optisches Verstärkungsmedium 5 angeordnet, das bei diesem Ausführungsbeispiel durch einen dotierten Wirtskristall, nämlich Nd:YVO₄, gebildet ist. Die zuvor beschriebene Anordnung bildet eine erste Verstärkerstufe 10. Der Ausgangsstrahl der ersten Verstärkerstufe 10 wird über den Spiegel 4 zu einer zweiten Verstärkerstufe 12 gelenkt, die in ihrem grundsätzlichen Aufbau zu der ersten Verstärkerstufe 10 entsprechend ausgestaltet ist. Die zweite Verstärkerstufe 12 weist jedoch abweichend von der ersten Verstärkerstufe 10 ein zweites Verstärkungsmedium (zweites Lasermedium 5') auf, das bei diesem Ausführungsbeispiel durch einen dotierten Wirtskristall, nämlich Nd:GdVO₄, gebildet ist. Mit dem Bezugszeichen 7 ist in Fig. 1 der Ausgangsstrahl des Verstärkers bezeichnet.

Aufgrund der Verwendung unterschiedlicher Laserkristalle weichen somit die Materialeigenschaften des ersten Lasermediums 5 von den Materialeigenschaften des zweiten Lasermediums 5' ab, wobei sich die Emissionsbandbreiten der Lasermedien 5, 5' erfindungsgemäß überlappen.

Falls entsprechend den jeweiligen Anforderungen erforderlich oder gewünscht, können der zweite Verstärkerstufe 12 ggf. noch weitere Verstärkerstufen nachgeordnet werden, wie in Fig. 1 mit dem Bezugszeichen 14 bezeichnet.

Der in Fig. 1 dargestellte Verstärker ermöglicht durch die Verwendung der unterschiedlichen Lasermedien 5, 5' mit sich teilweise überlagernden Emissionsspektren die Erzeugung eines neuen, verbreiterten Verstärkungsspektrums und damit die Verstärkung von Laserpulsen mit Stärken im Bereich von ca. 0,5 ps bis 10 ps.

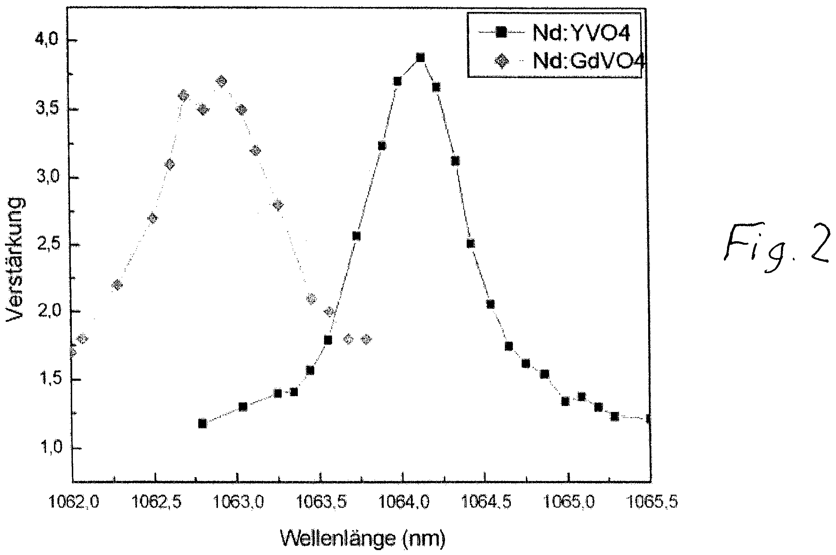

Fig. 2 zeigt ein Diagramm zur Verdeutlichung der Emissionsspektren der Lasermedien 5, 5'.

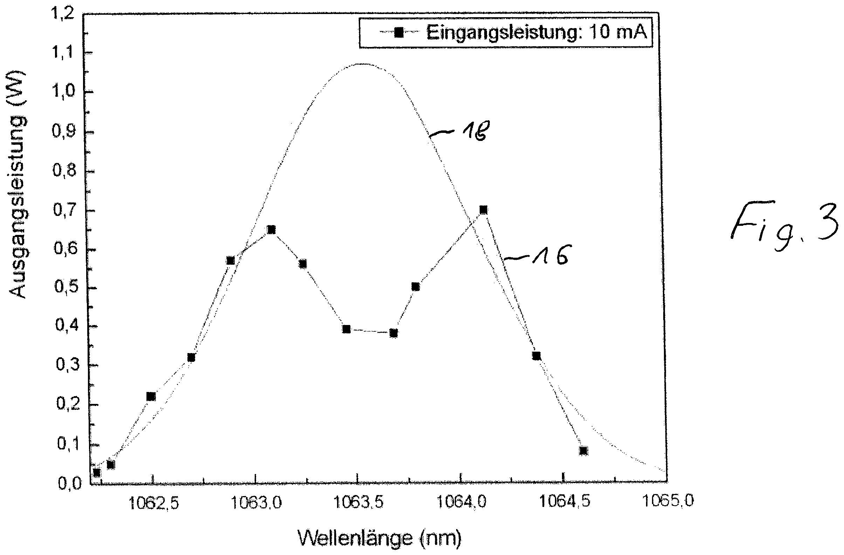

In Fig. 3 ist das bei Verwendung der Lasermedien 5, 5' resultierende Emissionsspektrum dargestellt und mit dem Bezugszeichen 16 bezeichnet. Mit dem Bezugszeichen 18 ist in Fig. 3 ein mögliches zu verstärkendes Eingangsspektrum mit einer Halbwertsbreite von ca. 2 nm dargestellt. Mit dieser spektralen Breite des Emissionsspektrums ist beispielsweise eine Verstärkung von Pulsen im Bereich unterhalb 1 ps möglich.

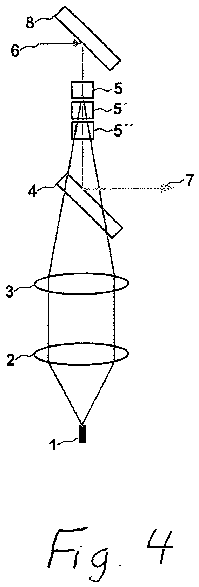

In Fig. 4 ist ein zweites Ausführungsbeispiel eines erfindungsgemäßen Verstärkers dargestellt, das sich von dem Ausführungsbeispiel gemäß Fig. 1 dadurch unterscheidet, dass die unterschiedlichen Lasermedien innerhalb der Verstärkerstufe zwischen den Spiegeln 4, 8 angeordnet sind. Lediglich beispielshalber sind in Fig. 4 drei Lasermedien 5, 5', 5" dargestellt, die unmittelbar aufeinanderfolgend, d. h. ohne Zwischenschaltung von Spiegeln oder anderen Strahlformungs- oder -lenkungseinrichtungen, angeordnet sind.

Das dritte Lasermedium 5" ist lediglich beispielshalber und stellvertretend dafür dargestellt, dass entsprechend den jeweiligen Anforderungen eine beliebige Anzahl von Lasermedien verwendet werden kann. Nachfolgend werden die Eigenschaften betrachtet, die sich aus der Kombination des ersten Lasermediums 5 mit dem zweiten Lasermedium 5' ergeben.

Bei dem dargestellten Ausführungsbeispiel sind die Materialeigenschaften der Lasermedien 5, 5' für eine gezielte Beeinflussung des Absorptionsverlaufes entlang der Kristallachse gewählt.

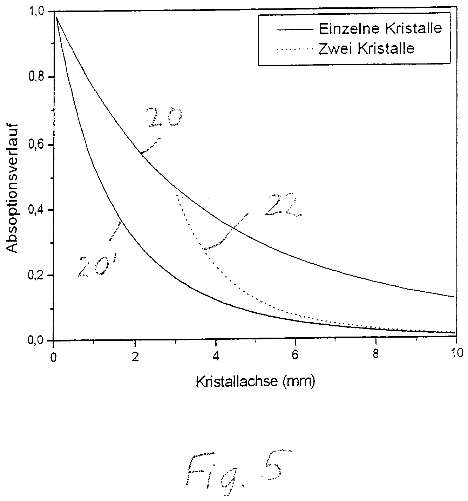

Fig. 5 stellt den Absorptionsverlauf entlang der Kristallachse dar, wobei mit dem Bezugszeichen 20 der Absorptionsverlauf für einen einzelnen Kristall und mit dem Bezugszeichen 22 der sich bei Kombination der Lasermedien bzw. Laserkristalle 5, 5' ergebende Absorptionsverlauf bezeichnet ist. Aus Fig. 5 ist ersichtlich, dass auf diese Weise der Absorptionsverlauf und somit die longitudinale Verteilung der Pumpleistung beeinflusst werden kann. Weiterhin kann durch die verbesserte Absorption die Kristalllänge der Laserkristalle bzw. Lasermedien 5, 5' verkürzt werden, was eine bessere räumliche Überlappung zwischen Lasermoden und Pumpmode ermöglicht. Dies wirkt sich positiv auf die Gesamteffizienz der Verstärkeranordnung aus.

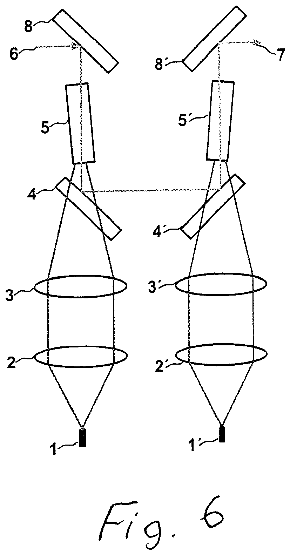

In Fig. 6 ist ein drittes Ausführungsbeispiel eines erfindungsgemäßen Verstärkers dargestellt, bei dem innerhalb einer einzelnen Verstärkerstufe 10 zwischen den Spiegeln 4, 8 unmittelbar aufeinanderfolgend zwei Lasermedien (Laserkristalle 5, 5') angeordnet sind.

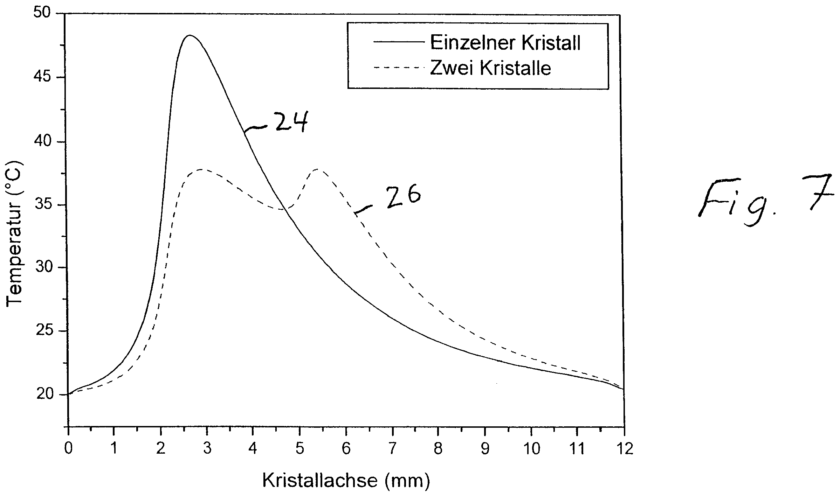

Fig. 7 zeigt den sich bei Betrieb des Verstärkers ergebenden Temperaturverlauf entlang der Kristallachse. Mit dem Bezugszeichen 24 ist der Temperaturverlauf bezeichnet, der sich bei Verwendung eines einzelnen Laserkristalls ergibt. Demgegenüber ist mit dem Bezugszeichen 26 der Temperaturverlauf gekennzeichnet, der sich bei Verwendung zweier Laserkristalle, wie in Fig. 6 dargestellt, ergibt. Aus Fig. 7 ist ersichtlich, dass die in den Laserkristallen auftretende maximale Temperatur durch Verwendung von zwei Laserkristallen 5, 5' deutlich verringert werden kann. Die Temperaturverringerung wirkt sich positiv auf temperaturabhängige Effekte, beispielsweise thermisch induzierte Spannungen, die zu einer Zerstörung eines Laserkristalls führen können, und thermooptische Effekte, beispielsweise die thermische Linse, aus.

Für das Design nichtregenerativer optischer Verstärker stellt die Erfindung damit neue Möglichkeiten bereit.

## Patentansprüche

1. Nichtregenerativer optischer Verstärker,
mit einem ersten optischen Verstärkungsmedium (5) und
mit wenigstens einem zweiten optischen Verstärkungsmedium (5'),
wobei die Materialeigenschaften des ersten Verstärkungsmediums (5) wenigstens teilweise von den Materialeigenschaften des zweiten Verstärkungsmediums (5') abweichen,
wobei sich die Emissionsspektren (Fig. 2) der Verstärkungsmedien (5, 5') teilweise überlappen,
wobei die optischen Verstärkungsmedien (5, 5') durch Festkörper-Volumenkristalle gebildet sind,
wenigstens ein Verstärkungsmedium (5, 5') einen Wirtskristall aufweist, der mit einem Dotierungsmaterial dotiert ist, das Nd und/oder Yb ist und
wobei der Verstärker als Ultrakurzpuls-Verstärker ausgebildet ist, dessen Ausgangssignal ein Pulssignal mit einer Pulsdauer von 0,5 ps bis 10 ps, ist.

2. Verstärker nach Anspruch 1, **dadurch gekennzeichnet, dass** die Verstärkungsmedien einen Emissionswirkungsquerschnitt (Emissionswirkungsgrad) von > 1x10⁻¹⁹/cm² aufweisen.

3. Verstärker nach Anspruch 1 oder 2, dass die Festkörper-Volumenkristalle entlang der optischen Achse jeweils eine Länge von größer 1000 µm aufweisen.

4. Verstärker nach Anspruch 1, **dadurch gekennzeichnet, dass** der Wirtskristall YVO4 und/oder GdVO4 und/oder LuVO4 und/oder YIf und/oder YAG ist oder enthält.

5. Verstärker nach einem der vorhergehenden Ansprüche, **dadurch gekennzeichnet, dass** eine Anregungslichtquelle (1 bzw. 1') für eine modenselektive longitudinale Anregung der Verstärkungsmedien (5, 5') ausgestaltet ist.

6. Verstärker nach einem der vorhergehenden Ansprüche, **dadurch gekennzeichnet, dass** eine Anregungslichtquelle (1, 1') zur Anregung der Verstärkungsmedien (5, 5') eine Anregungswellenlänge für eine Anregung von 800-1.000 nm aufweist.

7. Verstärker nach einem der vorhergehenden Ansprüche, **dadurch gekennzeichnet, dass** die Emissionsspektren der Verstärkungsmedien (5, 5') sich derart überlappend ausgewählt sind, dass sich ein gegenüber den einzelnen Emissionsspektren spektral verbreitertes Verstärkungsspektrum ergibt.

8. Verstärker nach einem der vorhergehenden Ansprüche, **dadurch gekennzeichnet, dass** wenigstens zwei Verstärkungsmedien (5, 5') in Einstrahlrichtung einer Anregungslichtquelle (1) unmittelbar aufeinanderfolgend angeordnet sind.

9. Verstärker nach Anspruch 8, **dadurch gekennzeichnet, dass** zur gezielten Beeinflussung des Absorptionsverlaufes wenigstens zwei in Einstrahlrichtung der Anregungslichtquelle (1) unmittelbar aufeinanderfolgend angeordnete Verstärkungsmedien unterschiedliche Absorptionseigenschaften aufweisen.

10. Verstärker nach einem der vorhergehenden Ansprüche, **dadurch gekennzeichnet, dass** wenigstens ein Laserkristall (5, 5') als optisches Verstärkungsmedium relativ zu der optischen Achse (23) des Verstärkers gekippt angeordnet ist.

11. Verstärker nach einem der vorhergehenden Ansprüche, **dadurch gekennzeichnet, dass** das Eingangssignal des Verstärkers aus einer Seed-Quelle, beispielsweise einem modengekoppelten und/oder anderweitig gepulsten Faser- oder Festkörperoszillator oder einem Halbleiterlaser, stammt.

## Claims

1. Non-regenerative optical amplifier, having a first optical amplifying medium (5) and at least one second optical amplifying medium (5'),
wherein the material properties of the first amplifying medium (5) differ at least partly from the material properties of the second amplifying medium (5'),
wherein the emission spectra (Fig. 2) of the amplifying media (5, 5') partly overlap, wherein the optical amplifying media (5, 5, ') are formed by solid-state bulk crystals,
at least one amplifying medium (5, 5') has a host crystal which is doped with a dopant, which is Nd and/or Yb and,
wherein the amplifier is in the form of an ultrashort pulse amplifier, the output signal of which is a pulse signal with a pulse duration of 0.5 ps to 10 ps.

2. Amplifier according to claim 1, **characterised in that** the amplifying media have an emission effective cross-section (emission efficiency) of > 1×10⁻¹⁹/cm².

3. Amplifier according to claim 1 or 2, **characterised in that** the solid-state bulk crystals each have a length greater than 1,000 µm along the optical axis.

4. Amplifier according to claim 1, **characterised in that** the host crystal is or contains YVO4 and/or GdVO4 and/or LuVO4 and/or Ylf and/or YAG.

5. Amplifier according to any of the preceding claims, **characterised in that** an excitation light source (1 or 1') is designed for mode-selective longitudinal excitation of the amplifying media (5, 5').

6. Amplifier according to any of the preceding claims, **characterised in that** an excitation light source (1, 1') for exciting the amplifying media (5, 5') has an excitation wavelength for an excitation of 800-1,000 nm.

7. Amplifier according to any of the preceding claims, **characterised in that** the emission spectra of the amplifying media (5, 5') are selected to overlap one another such that an amplification spectrum is achieved that is spectrally wider than the individual emission spectra.

8. Amplifier according to any of the preceding claims, **characterised in that** at least two amplifying media (5, 5') are situated in direct succession in the beam direction of an excitation light source (1).

9. Amplifier according to claim 8, **characterised in that** for influencing the absorption curve in a targeted manner, at least two amplifying media, which are situated in direct succession in the beam direction of the excitation light source (1), have different absorption properties.

10. Amplifier according to any of the preceding claims, **characterised in that** at least one laser crystal (5, 5'), which is tilted relative to the optical axis (23) of the amplifier, is arranged as an optical amplifying medium.

11. Amplifier according to any of the preceding claims, **characterised in that** the input signal of the amplifier originates from a seed source, for example a mode-coupled and/or differently pulsed fibre or solid-state oscillator or a semiconductor laser.

## Revendications

1. Amplificateur optique non régénératif avec un premier milieu d'amplification optique (5) avec au moins un deuxième milieu d'amplification optique (5'),
les propriétés du matériau du premier milieu d'amplification (5) étant au moins partiellement différentes des propriétés du matériau du deuxième milieu d'amplification (5'),
les spectres d'émission (Fig. 2) des milieux d'amplification (5, 5') se superposant partiellement,
les milieux d'amplification optique (5, 5') étant constitués de cristaux massifs solides,
au moins un milieu d'amplification (5, 5') comprenant un cristal receveur qui est dopé avec un matériau de dopage qui est du Nd et/ou du Yb et
l'amplificateur étant conçu comme un amplificateur à impulsions ultra-courtes dont le signal de sortie est un signal à impulsions avec une durée d'impulsion de 0,5 ps à 10 ps.

2. Amplificateur selon la revendication 1, **caractérisé en ce que** les milieux d'amplification présentent une section transversale efficace d'émission (rendement d'émission) > 1x10⁻¹⁹/cm².

3. Amplificateur selon la revendication 1 ou 2, **caractérisé en ce que** les cristaux massifs solides présentent, long de l'axe optique, chacun une longueur supérieure à 1000 µm.

4. Amplificateur selon la revendication 1, **caractérisé en ce que** le cristal receveur est ou contient du YVO4 et/ou du GdVO4 et/ou du LuVO4 et/ou du Yif et/ou du YAG.

5. Amplificateur selon l'une des revendications précédentes, **caractérisé en ce qu'**une source de lumière d'excitation (1 ou 1') est conçue pour une excitation longitudinale à sélection de modes des milieux d'amplification (5, 5').

6. Amplificateur selon l'une des revendications précédentes, **caractérisé en ce qu'**une source de lumière d'excitation (1, 1') pour l'excitation des milieux d'amplification (5, 5') présente une longueur d'onde d'excitation pour une excitation de 800 à 1000 nm.

7. Amplificateur selon l'une des revendications précédentes, **caractérisé en ce que** les spectres d'émission des milieux d'amplification (5, 5') sont sélectionnés de façon à se superposer, de façon à obtenir un spectre d'amplification spectralement élargi par rapport aux différents spectres d'émission.

8. Amplificateur selon l'une des revendications précédentes, **caractérisé en ce qu'**au moins deux milieux d'amplification (5, 5') sont disposés de façon à se succéder directement dans la direction d'émission d'une source de lumière d'excitation (1).

9. Amplificateur selon la revendication 8, **caractérisé en ce que**, pour influencer de manière ciblée le tracé d'absorption, au moins deux milieux d'amplification disposés de façon à se succéder directement dans la direction d'émission d'une source de lumière d'excitation (1) présentent des propriétés d'absorption différentes.

10. Amplificateur selon l'une des revendications précédentes, **caractérisé en ce qu'**au moins un cristal laser (5, 5') est disposé, en tant que milieu d'amplification optique, de manière basculée par rapport à l'axe optique (23) de l'amplificateur.

11. Amplificateur selon l'une des revendications précédentes, **caractérisé en ce que** le signal d'entrée de l'amplificateur provient d'une source d'amorçage, par exemple d'un oscillateur à corps solides ou à fibres à couplage de modes et/ou pulsés d'une autre manière ou d'un laser à semi-conducteur.
